Europäisches Patentamt

(19) European Patent Office

Office européen des brevets

(11) Numéro de publication: **0 112 755**
**B1**

(12) **FASCICULE DE BREVET EUROPÉEN**

(45) Date de publication du fascicule du brevet:
**08.06.88**

(21) Numéro de dépôt: **83402368.1**

(22) Date de dépôt: **07.12.83**

(51) Int. Cl.⁴: **F 42 B 15/033, F 02 K 9/90**

(54) Dispositif de pilotage par jets de gaz latéraux.

(30) Priorité: **17.12.82 FR 8221227**

(43) Date de publication de la demande:
**04.07.84 Bulletin 84/27**

(45) Mention de la délivrance du brevet:
**08.06.88 Bulletin 88/23**

(84) Etats contractants désignés:
**CH DE GB IT LI SE**

(56) Documents cité:
**EP-A-0 060 726**
**EP-A-0 064 433**
**FR-A-2 386 802**
**US-A-4 017 040**

(73) Titulaire: **THOMSON BRANDT ARMEMENTS, 52, avenue des Champs Elysées, F-75008 Paris (FR)**

(72) Inventeur: **Crepin, Roger, THOMSON- CSF SCPI 173 Bld Hausmann, F-75379 Paris Cedex 08 (FR)**

(74) Mandataire: **Desperrier, Jean- Louis, THOMSON-CSF SCPI 19, avenue de Messine, F-75008 Paris (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

**Description**

L'invention se rapporte aux projectiles guidés, elle concerne plus particulièrement un dispositif de pilotage par jets de gaz latéraux destiné à de tels projectiles.

La capacité de manoeuvre des cibles offensives est constamment améliorée, il en résulte que l'erreur terminale de trajectoire, ou distance de passage, des projectiles augmente en conséquence. Dans un projectile guidé classique qui met en oeuvre un dispositif de pilotage d'un type aérodynamique nécessitant une prise d'incidence pour modifier sa trajectoire de vol, la constante de temps liée à la réponse aérodynamique est de l'ordre de plusieurs dixièmes de seconde. En comparaison, dans un dispositif de pilotage par jets de gaz latéraux qui crée un système de forces appliqué au centre de gravité du projectile afin d'assurer le déplacement direct du centre de gravité sur sa trajectoire, des constantes de temps inférieurs au dixième de seconde sont envisageables.

On sait que la trajectoire d'un projectile peut être modifiée par éjection d'un jet de matière dont le débit et la direction sont variés pour créer une force de poussée déterminée. Cette force de poussée peut être obtenue à partir de nombreuses sources d'énergie, telles que des propergols solides ou liquides. Tandis que les dispositifs de pilotage par jets de gaz latéraux mettant en oeuvre des sources d'énergie à propergols liquides, procurent un fonctionnement souple du fait que ces sources d'énergie peuvent être activées ou désactivées de façon intermittente à la demande, ils présentent d'une complexité excessive, une certaine sensibilité à la température et surtout sont difficilement stockables. Aussi dans le dispositif de pilotage considéré ici, la source d'énergie est-elle constituée par un propergol solide dont la combustion fournit un flux de gaz continu. Une difficulté inhérente à l'emploi d'un propergol solide résulte du fait qu'une fois la combustion totalement amorcée, la pression de combustion doit se maintenir dans des limites qui varient peu ; une seconde difficulté résulte du fait que le débit du flux de gaz étant continu, la résultante des forces de poussée appliquées sur le projectile doit être nulle en l'absence d'ordre de pilotage.

Un dispositif de pilotage par jets de gaz latéraux comprend au moins une paire de tuyères diamétralement opposées, mais plus généralement deux paires de tuyères orientées dans deux plans de pilotage mutuellement orthogonaux. Ces tuyères sont alimentées par une source d'énergie fournissant un flux de gaz à débit sensiblement constant et dans ces tuyères sont inclus des moyens d'aiguillage qui permettent de modifier le débit de gaz différentiel entre les tuyères de façon à créer une force de poussée résultante de grandeur et de direction déterminée.

On connait déjà par le document européen EP-A-0064433 déposé au nom de la Demanderesse, un dispositif de pilotage par jets de gaz latéraux qui atteint les objectifs précités. Ce dispositif comprend deux paires de tuyères ; chacune de ces paires de tuyères est orientée selon les plans de pilotage du projectile. Le débit de gaz différentiel dans chacune des paires de tuyères est contrôlé par un commutateur constitué de deux palettes articulées en rotation et placées dans les conduits de gaz des tuyères, ces palettes sont mécaniquement couplées à un vérin pneumatique double-effet et permettent d'obturer alternativement l'une et l'autre des tuyères.

Le document européen EP-A-0060726 décrit un système d'impulseur à gaz pour commander le vol d'un projectile envoyé par un canon. Il comprend au moins deux tuyères diamétralement opposées dont la section de débit des gaz est réglée au moyen d'une barre coulissante. Cette barre est commandée par des moyens électromécaniques qui ne sont pas bistables. Au contraire, ces moyens de commande bougent la barre de manière à réduire la section de débit d'une des tuyères, et d'augmenter donc la section de débit de l'autre tuyère de manière à ce que à un même instant, les débits des deux tuyères soient adaptés à la correction de trajectoire voulue.

Le document américain US-A-4 017 040 décrit un moteur de roquette destiné à déplacer une charge ou à extraire cette charge d'un avion. D'autre part, il ne décrit qu'un seul piston dont la plus grande section est circulaire et très large, ce qui nuit au système car l'encombrement est trop important.

Dans le document FR-A-2 386 802, deux pistons sont utilisés sous forme d'une servovalve à double effet, dans un dispositif de commande de l'actionnement de l'organe mobile qui obture l'une des deux tuyères. Le déplacement lui-même de cet organe mobile est assuré par un vérin.

Ces dispositifs de pilotage connus quoiqu'ils puissent fonctionner de façon satisfaisante présentent des limitations lorsque l'on veut réaliser des dispositifs de pilotage ayant un encombrement réduit et un temps de réponse court, tout en recherchant un coût de fabrication adapté au coût du projectile.

Dans le but de surmonter les limitations énoncées ci-dessus, l'invention concerne un dispositif tel que décrit dans l'art antérieur le plus proche EP-A-0 060 726 et comportant un dispositif de pilotage par jets de gaz latéraux comprenant au moins une paire de tuyères diamétralement opposées, lesquelles sont couplées à un générateur des gaz par des conduits indépendants, une barre coulissante et des moyens de commande de ladite barre. Selon l'invention le dispositif est caractérisé en ce que les moyens de commande sont pneumatiques et bistables, assurant le déplacement alternatif de la barre, de manière à ce que les extrémités de ladite barre obturent complètement et alternativement lesdits conduits afin d'obtenir un pilotage selon un cycle de fonctionnement "tout ou rien'', lesdits moyens de commande pneumatique de déplacement de la barre coulissante comprennent deux pistons solidaires de cette barre, qui sont encastrés librement dans deux cavités fixes, ces pistons étant disposés de part et d'autre de la section médiane de la barre, les sections des pistons étant de forme rectangulaire.

D'autres caractéristiques de l'invention apparaitront dans la description détaillée, à titre d'exemple non limitatif, faite en regard de dessins annexés, dans lesquels

- la figure 1 représente un dispositif de pilotage par jets de gaz latéraux de l'art antérieur.

- la figure 2 illustre un projectile guidé comprenant un dispositif de pilotage par jets de gaz latéraux.

- la figure 3 représent un mode de réalisation d'un dispositif de pilotage conforme à l'invention.

- la figure 4 représente, sous une forme schématique, un mode réalisation des moyens électro-pneumatiques de commande de la barre coulissante.

- la figure 5 représente, une variante de réalisation des moyens pneumatiques de déplacement de la barre coulissante.

- la figure 6 représente, un mode de construction d'un premier plan de pilotage fourni par le dispositif.

- la figure 7 représente, un mode de construction d'un second plan de pilotage fourni par le dispositif.

- la figure 8 représente, un mode de construction d'une servolvave de commande des moyens pneumatiques de déplacement de la barre coulissante.

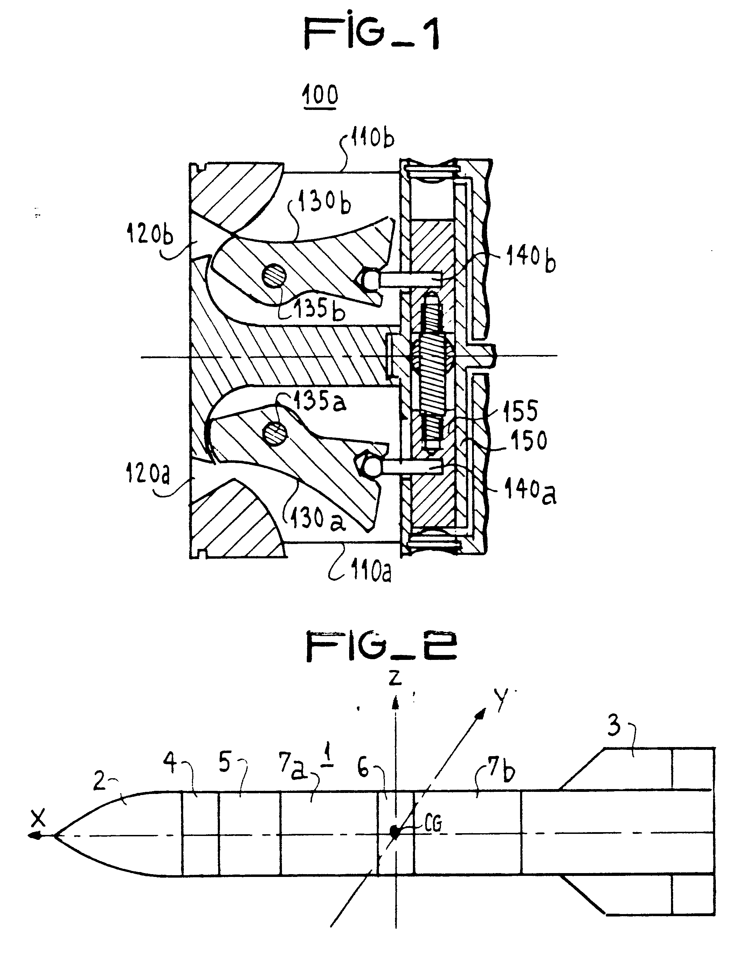

La figure 1 représente, selon une vue en coupe, suivant un des deux plans de pilotage, le dispositif de pilotage par jets de gaz latéraux décrit dans le Document EP-A-0 064 433 déjà cité. Ce dispositif 100, dans chacun des plans de pilotage comprend une paire de tuyères 110a et 110b diamétralement opposées, chacune des tuyères est couplée par un conduit de gaz à une source de gaz sous pression qui fournit un flux de gaz aux orifices d'entrée 120a et 120b. Ce dispositif de pilotage comprend également deux commutateurs permettant de modifier indépendamment le débit différentiel de chacune des paires de tuyères. Un commutateur comprend deux palettes mobiles 130a et 130b qui participent à l'une des parois des conduits de gaz des tuyères. Ces palettes mobiles en rotation autour d'axes fixes 135a et 135b sont reliées mécaniquement, par des biellettes 140a et 140b, à un vérin double-effet 150 réalisant ainsi un mécanisme à parallèlogramme déformable. Le deplacement du piston 155 du vérin 150 permet d'obturer alternativement les tuyères du dispositif. Avec ce type de mécanisme, il est possible d'imbriquer de façon orthogonale les deux paires de tuyères et leur commutateur de flux de gaz.

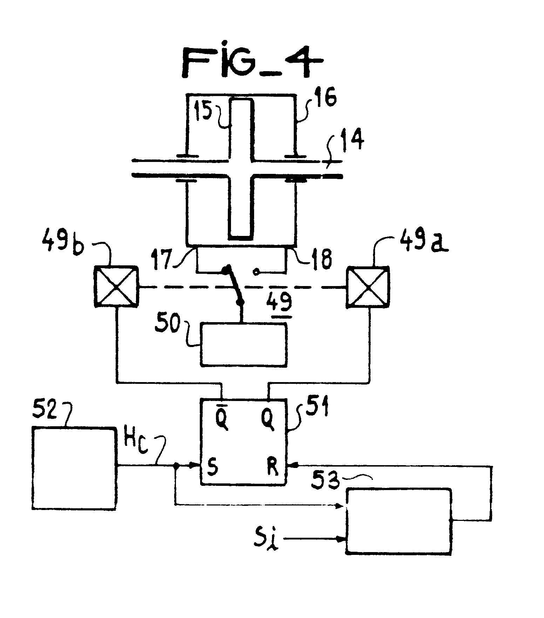

La figure 2 représente un projectile guidé, ou missile, comprenant un dispositif de pilotage par jets de gaz latéraux. Ce projectile 1, d'axe longitudinal X comprend essentiellement, un autodirecteur 2 situé dans la partie ogival du corps du projectile ; un empennage aérodynamique 3 qui peut être éventuellement utilisé pour contrôler l'attitude de roulis du projectile autour de son axe longitudinal X ; une charge militaire 4, des circuits 5 de traitement des signaux de guidage fournis par l'autodirecteur et d'élaboration des ordres de pilotage à une section de pilotage 6 située au voisinage du centre de gravité CG du projectile, cette section de pilotage incluant deux paires de tuyères diamétralement opposées et orientées selon les plans transverses de pilotages Y et Z du projectile et des moyens de commande du débit de gaz différentiel traversant ces tuyères, et, enfin un générateur de gaz 7a et 7b du type symétrique de façon à limiter le déplacement du centre de gravité du projectile au cours de la combustion du propergol. Les tuyères peuvent eventuellement être inclinées vers l'arrière du projectile afin de fournir, complèmentairement aux forces de poussée latérales, une force de poussée longitudinale dans le but d'entretenir la vitesse de déplacement du projectile sur sa trajectoire de vol.

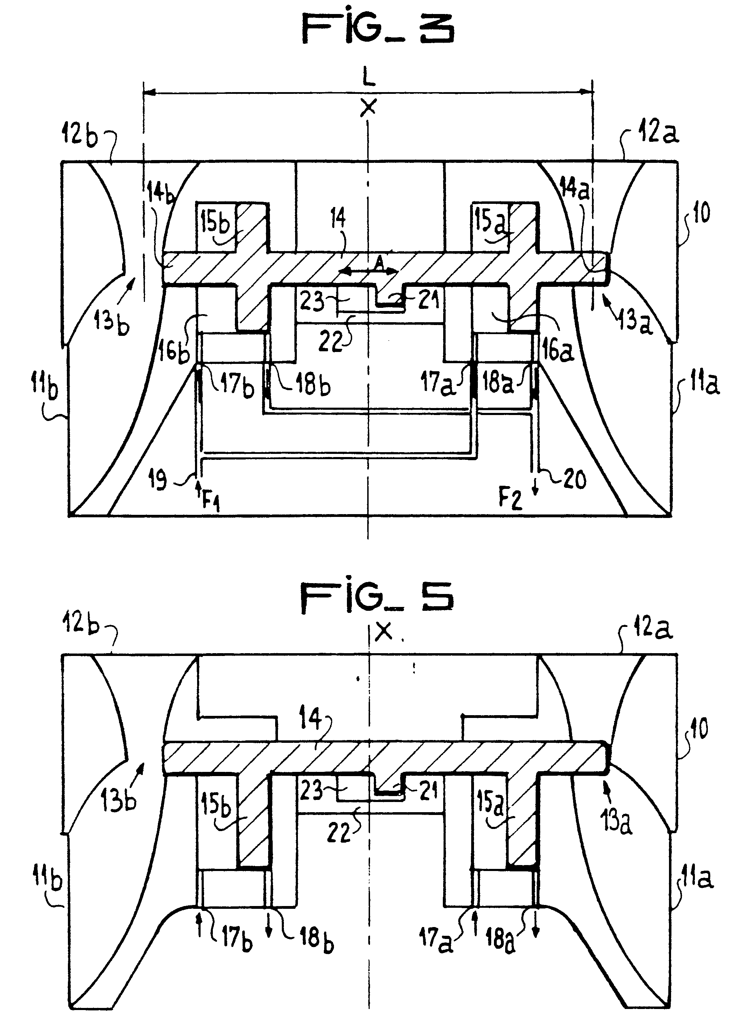

La figure 3 représente, selon une vue en coupe simplifiée, un mode de réalisation d'un dispositif de pilotage par jets de gaz conforme à l'invention, ce mode de réalisation est limité à un plan de pilotage. Le dispositif de pilotage comprend :

- un corps cylindrique 10 de diamètre Ø et d'axes longitudinal X correspondant à l'axe longitudinal X du projectile ; ce corps constitue la section 6 du projectile représenté à la figure 2.

- Deux tuyères 11a et 11b, qui sont diamétralement opposées et débouchent sur la face externe du corps, ces tuyères sont couplées à un générateur de gaz (non représenté) par des conduits d'amenée de gaz, ces conduits de gaz comportent des orifices d'entrée 12a et 12b et des cols de tuyères 13a et 13b, de section rectangulaire, dont l'entraxe L est parfaitement déterminé.

- Une barre mobile coulissante 14, laquelle barre est libre de se déplacer selon un mouvement alternatif indiqué par la flèche A, la longueur de cette barre est sensiblement égale à l'entraxe L des cols de tuyère et ses extrémités 14a et 14b, également de section rectangulaire, constituent des clapets d'obturation des cols de tuyère 13a et 13b.

La barre coulissante 14 est munie à égale distance du centre de la barre, de deux disques 15a et 15b, ou pistons, qui s'encastrent dans des cavités 16a et 16b à l'intérieur desquelles ils peuvent coulisser librement. Les cavités comportent deux orifices d'entrée/sortie 17a, 17b et 18a, 18b, reliés en parallèle deux à deux, lesquels orifices sont alimentés alternativement par un fluide de commande sous pression, issu d'un premier 19 et d'un second 20 orifices d'entrée/sortie, pour créer sur les faces des pistons des forces de poussée alternatives et provoquer le déplacement correspondant de la barre coulissante 14. Les pistons et les cavités sont fabriqués d'une façon précise pour obtenir un libre déplacement des pistons et conjointement une très faible fuite du fluide de commande entre les orifices d'entrée/sortie et entre ces orifices et l'extérieur des cavités. La vitesse de déplacement de la barre coulissante est conditionnée par les forces de poussée appliquées sur les faces des pistons 15a et 15b, ces forces de poussée est proportionnelle au produit de la pression du fluide de commande par la section efficace des pistons. De plus, la barre coulissante est munie d'un ergot 21 qui est situé en regard d'une gorge 23 disponible dans un élément 22 fixe dont la position physique est parfaitement déterminée. Cette réalisation de la barre coulissante 14 est compacte et permet de libérer un emplacement disponible pour y loger une seconde barre coulissante afin de contrôler le débit de gaz différentiel d'une seconde paire de tuyères comme il sera décrit ultérieurement. De plus, la barre coulissante est munie d'un ergot 21 qui est situé en regard d'une gorge 23 disponible dans un élément 22 fixe dont la position physique est parfaitement déterminée. Ces différents éléments fournissent deux butées de la barre coulissante et évitent que celle-ci ne vienne au contact de la paroi des conduits de gaz des tuyères. Le fluide de commande, dont une première direction d'écoulement est indiquée par les flèches $F_1$ et $F_2$, est commuté périodiquement aux orifices d'entrée/sortie selon un cycle de fonctionnement "tout ou rien" dont le rapport cyclique peut être varié en fonction des signaux d'ordre fournis par la section de guidage du projectile. Ce rapport cyclique, correspond au rapport des périodes de temps pendant lesquelles le fluide de commande circule dans le premier sens indiqué par les flèches $F_1$ et $F_2$ puis dans le sens inverse. Ainsi, lorsque ce rapport cyclique est égal à l'unité, le débit différentiel du flux de gaz traversant les tuyères opposées à une valeur nulle et par voie de consequence la résultante des forces de poussées latérales appliquées au projectile a également une valeur nulle. Inversement, lorsque la valeur de ce rapport cyclique est différent de l'unité, le débit différentiel du flux de gaz sortant des tuyères opposées à une valeur non nulle, il en résulte une force de poussée latérale appliquée au projectile et une modification correspondante de la trajectoire de vol de celui-ci. On peut noter que la position relative du piston 15 sur la barre 14 n'est pas obligatoirement celle représentée sur la figure.

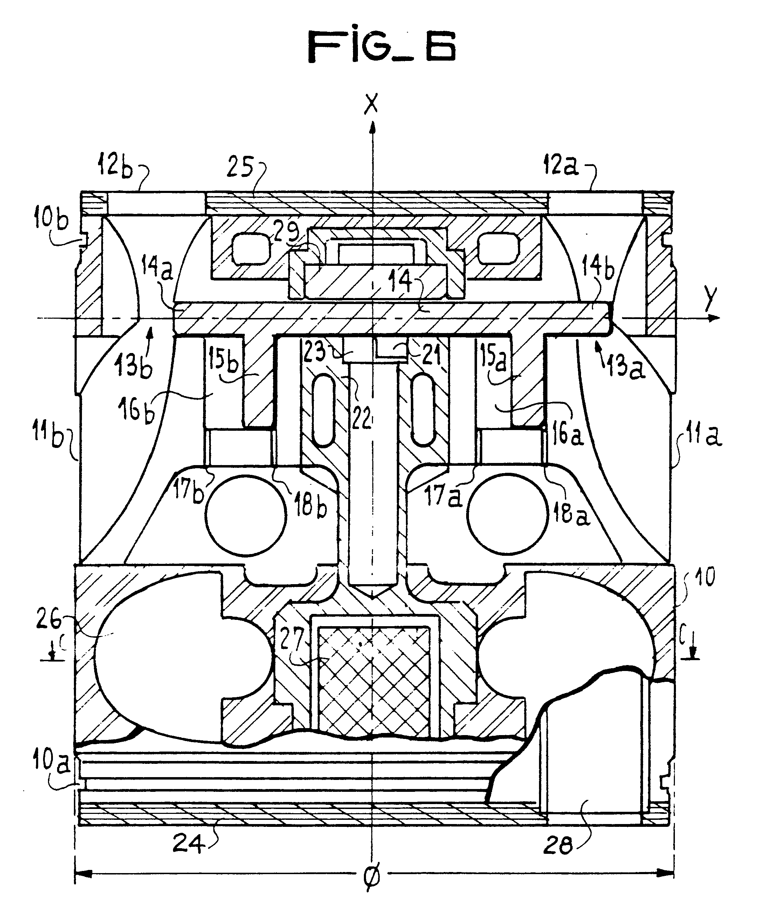

La figure 4 représente, sous une forme schématique, un mode de réalisation de moyens électropneumatiques permettant de commander le déplacement de la barre coulissante 14 afin d'obturer alternativement les cols de tuyères 13a et 13b des tuyères respectives 11a et 11b. Ces moyens électro-pneumatiques de commande de la barre coulissante comprennent

- un inverseur électro-pneumatique 49, cet inverseur comporte une entrée reliée à une source de gaz sous pression 50 et préférentiellement à la source de gaz d'alimentaton des tuyères de pilotage ; deux sorties reliées respectivement aux orifices d'entrée 17 et 18 de la cavité 16 à l'intérieur de laquelle est placé le piston 15 solidaire de la barre coulissante 14, et deux actionneurs électromagnétiques 49a et 49b.

- une bascule électronique bistable 51 dans laquelle les sorties Q et $\bar{Q}$ sont connectées respectivement aux entrées des actionneurs électromagnétiques 19a et 19b.

- un circuit d'horloge 52 qui fournit un signal d'horloge à la fréquence $H_c$ de cycle de fonctionnement de la barre coulissante, ce circuit d'horloge est connecté à une première entrée de commande S de la bascule bistable 51.

- un modulateur de durée 53, ce modulateur de durée comporte une première entrée connectée au circuit d'horloge 52, une seconde entrée qui reçoit un signal Si représentatif d'un ordre de pilotage et une sortie connectée à une seconde entrée de commande R de la bascule bistable 51.

La figure 5 représente, selon une vue en coupe simplifiée, une variante de réalisation des moyens pneumatiques d'entraînement de la barre coulissante 14. Selon cette seconde réalisation les pistons 15a et 15b sont situes sur une même face de la barre coulissante au lieu d'être situés sur les deux faces opposées de cette barre comme décrit précédemment. La section, des pistons n'est pas obligatoirement de forme semi-circulaire mais peut être préférentiellement de forme rectangulaire d'où il en résulte une simplification de construction des moyens pneumatiques, et une réduction de leurs encombrements.

La figure 6 représente, selon une vue en coupe, un mode de construction d'un dispositif de pilotage à jets de gaz latéraux dont les éléments constitutifs viennent d'être décrits. Ce dispositif de pilotage comporte deux plans de pilotage, mutuellement orthogonaux, sur cette figure en considérée plus particulièrement, un des plans de pilotage, par exemple, le plan de pilotage Y. Le corps du dispositif de pilotage est un élément de forme cylindrique de diamètre Ø et d'axe longitudinal orienté X, ce corps constitue la section de pilotage du projectile guidé considéré ici. Le corps 10 comporte des moyens de liaisons mécanique 10a et 10b avec les sections adjacentes du projectile, ces sections adjacentes comme décrit à la figure 2 renferment le générateur du flux de gaz sous pression. Ce corps peut être réalisé en alliage léger et à cet effet il est équipé de flasques latéraux 24 et 25 dont la fonction est d'assurer une barrière thermique et conjointement un joint de liaison entre les sections adjacentes du projectile. Ce corps comporte, en outre, des logements tels que le logement 26 destiné à recevoir les électrovalves de commande des moyens pneumatique de la barre coulissante et un filtre de gaz 27 dont la fonction est d'épurer le fluide de commande fourni aux électrovalves. Le corps est traversé de part en part, parallèlement à l'axe longitudinal X, par des canalisations telles que la canalisation 28; la fonction de ces canalisations est d'assurer le fonctionnement en parallèle des deux parties du générateur de gaz. Les tuyères latérales 11a et 11b et leurs conduits de gaz sont réalisés en un matériau à faible érosion tel que le graphite. La barre coulissante 14 comporte sur l'une de ses faces, des pistons 15a et 15b de section rectangulaire et cet ensemble est réalisé en un matériau à haute résistance thermique tel que le molybdène. Les cavités 16a et 16b de logement des pistons 15a et 15b sont usinés dans les blocs de graphite qui fournissent les conduits d'air des tuyères et ces cavités comportent des orifices d'entrée/sortie 17a et 18b du fluide de commande. La barre coulissante est munie de son ergot de butée 21, lequel est logé dans la gorge 23 fournie par l'élément fixe 22. Les tuyères comportent des moyens d'obturations, non représentés, pour permettre un amorçage adéquate du générateur de gaz ; ces moyens d'obturation sont éliminés dès que la valeur de la pression du gaz atteint la valeur nominale de la pression de combustion. Enfin sur cette figure, est également représentée, une seconde barre coulissante 29 associée à la paire de tuyères orientée dans le plan de pilotage Z.

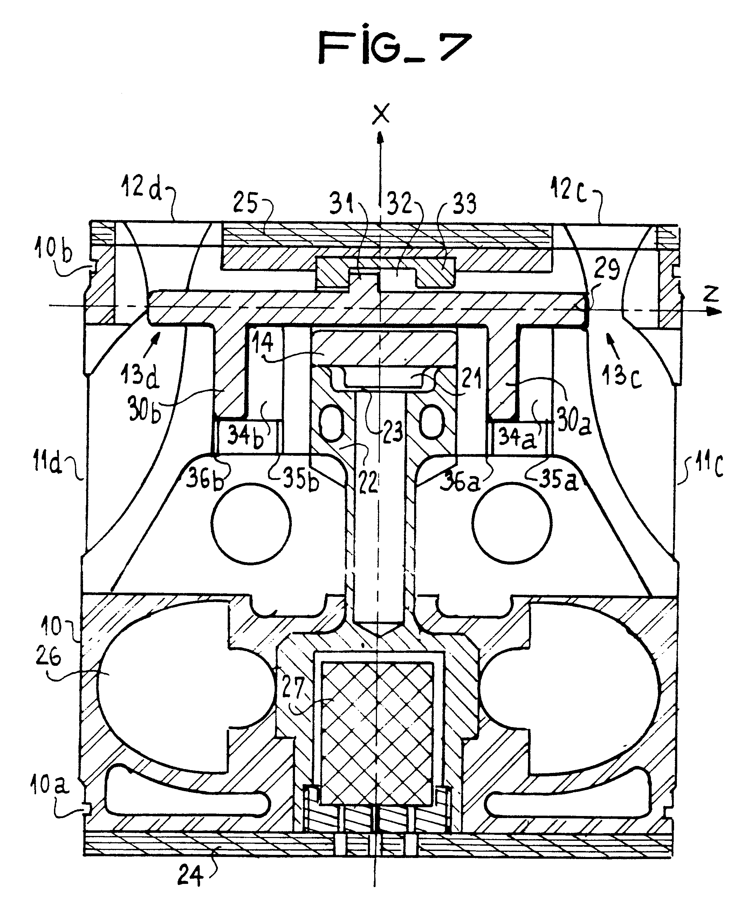

La figure 7 se rapporte à la figure précédente et représente, une vue en coupe du dispositif de pilotage selon le plan de pilotage Z. Dans ce plan Z, les éléments du dispositif de pilotage sont identiques à ceux décrits pour le plan de pilotage Y, ils comprennent notamment les tuyères 11c et 11d, les orifices d'entrée 12c et 12d des conduits de gaz des tuyères incluant les cols de tuyères 13c et 13d ; la barre coulissante 29 qui comporte les pistons 30a et 30b, et l'ergot de butée 31 situé en regard de la gorge 32 réalisé dans l'élément fixé 33. Les pistons 30a et 30b sont encastrés librement dans les cavités correspondantes 34a et 34b, lesquelles sont munies de leurs orifices d'entrée/sortie 35a, 36a et 35b, 36b.

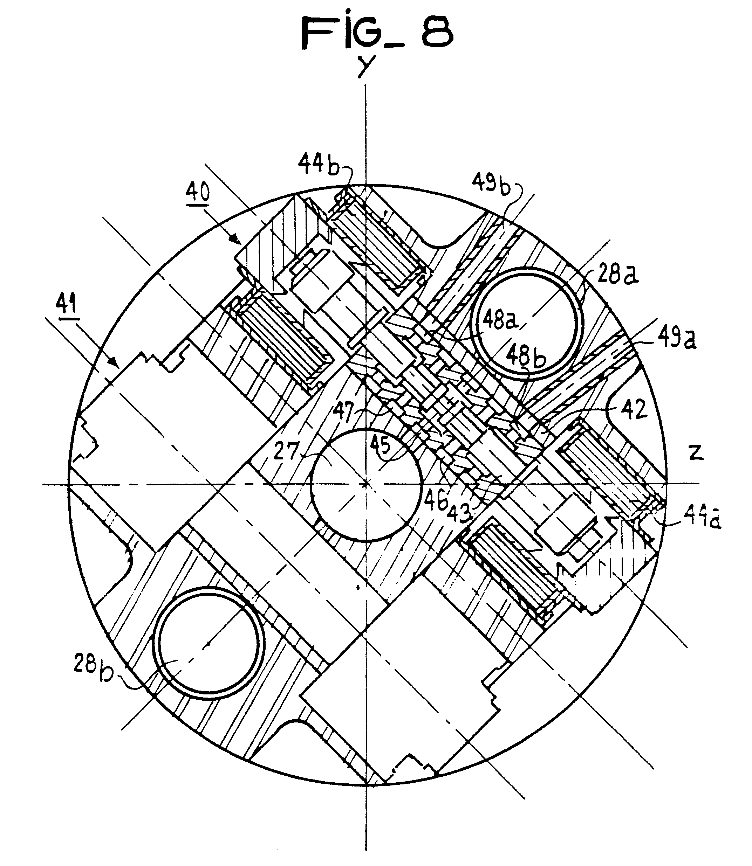

La figure 8 se réfère à la figure précédente et représente selon une vue en coupe CC, un mode de construction des électrovalves de commande des moyens pneumatiques de déplacement des barres coulissantes 14 et 29. Les électrovalves au nombre de deux, une pour chacune des paires de tuyères sont du type à "tiroirs" et leur axe longitudinal fait un angle de 45° avec les plans de pilotage Y et Z. Sur cette figure une seule électrovalve 40 est représentée, en détail, la seconde 41 étant disposée symétriquement par rapport aux axes du dispositif. Une électrovalve comprend un corps cylindrique 42 à l'intérieur duquel coulisse un noyau axial 43 dont la position est conditionnée par l'état d'excitation de deux électro-aimants 44a et 44b. Le corps de l'électrovalve comporte une entrée 45 reliée au filtre de gaz 27, une première 46 et une seconde 47 sorties reliées aux orifices d'entrée/sortie des cavités des moyens pneumatiques de déplacement de la barre coulissante correspondante et des troisièmes sorties 48a et 48b reliées à des conduits de gaz 49a et 49b qui débouchent sur l'extérieur. Sur cette figure deux canalisations de gaz 28a et 28b sont disposées à 45°, des plans de pilotage Y et Z, pour assurer un fonctionnement correct en parallèle des deux parties du générateur du flux de gaz.

On voit maintenant plus clairement, les avantages fournis par un dispositif de pilotage selon l'invention : les moyens de contrôle du flux de gaz traversant les tuyères sont extrément compacts et la fréquence mécanique de résonance correspondante est élevée, permettant ainsi des temps de réponses courts, de l'ordre de la dizaine de milliseconde pour des projectiles d'un diamètre Ø de l'ordre de 150mm ou plus.

L'invention n'est pas limitée dans ses caractéristiques au mode de réalisation décrit, exclusivement, à titre d'illustration, notamment le profil des tuyères latérales peut être modifié en fonction de l'inclinaison du jet de gaz, la forme des éléments peut être changée selon les procédés de fabrication utilisés et l'emplacement relatif des éléments dans le corps du dispositif peut être différent.

Le dispositif de pilotage par jets de gaz latéraux trouve son application dans les projectiles guidés, les missiles, les roquettes, les bombes, en combinaison ou non avec un système de pilotage aérodynamique.

## Revendications

1. Dispositif de pilotage par jets de gaz latéraux comprenant au moins une paire de tuyères diamétralement opposées (11a, 11b), lesquelles sont couplées à un générateur des gaz par des conduits indépendants (12a, 12b), une barre coulissante (14) et des moyens de commande (15, 16) de ladite barre, le dispositif étant caractérisé en ce que les moyens de commande sont pneumatiques et bistables, assurant le déplacement alternatif de la barre, de manière à ce que les extrémités (14a, 14b) de ladite barre obturent complètement et alternativement lesdits conduits afin d'obtenir un pilotage selon un cycle de fonctionnement "tout ou rien", lesdits moyens de commande pneumatique de déplacement de la barre coulissante comprennent deux pistons (15a, 15b) solidaires de cette barre, qui sont encastrés librement dans deux cavités fixes (16a, 16b) ces pistons étant disposés de part et d'autre de la section médiane de la barre, les sections des pistons étant de forme rectangulaire.

2. Dispositif selon la revendication 1, caractérisé en ce que la barre coulissante (14) est munie d'un ergot (21), lequel est placé dans une gorge (23) située dans un élément fixe (22) pour fournir des moyens de butée de cette barre.

3. Dispositif selon l'une des revendications 1 ou 2, caractérisé en ce qu'il comprend deux paires de tuyères orientées selon deux plans mutuellement orthogonaux.

**Patentansprüche**

1. Lenkvorrichtung, die mit seitlichen Gasstrahlen arbeitet, mit wenigstens einem Paar von einander diametral gegenüberliegenden Düsen (11a, 11b), welche über unabhängige Leitungen (12a, 12b) mit einem Gasgenerator gekoppelt sind, mit einer Gleitstange (14) und Mitteln zur Steuerung (15, 16) der obengenannten Stange, dadurch gekennzeichnet, daß die Steuermittel pneumatisch und bistabil sind und die Hin- und Herbewegung der Stange gewährleisten, so daß die Enden (14a, 14b) der obengenannten Stange die obengenannten Leitungen vollständig und abwechselnd verschließen, um eine Lenkung nach einem "Alles oder Nichts" Funktionszyklus zu erhalten, und daß die obengenannten Mittel zur pneumatischen Steuerung der Hin- und Herbewegung der Gleitstange zwei Kolben (15a, 15b) umfassen, die mit dieser Stange fest verbunden sind und in zwei feste Hohlräume (16a, 16b) frei eingelassen sind, wobei diese Kolben beiderseitig des Schnitts durch die Mitte der Stange angeordnet sind, und wobei die Querschnitte dieser Kolben rechteckförmig sind.

2. Vorrichtung nach Anspruch 1, dadurch gekennzeichnet, daß die Gleitstange (14) mit einem Zapfen (21) versehen ist, welcher sich in einer in einem festen Elemente (22) liegenden Rille (23) befindet, um Anschlagmittel für diese Stange zu bilden.

3. Vorrichtung nach einem der Ansprüche 1 oder 2, dadurch gekennzeichnet, daß sie zwei nach zwei aufeinander orthogonalen Ebenen orientierte Düsenpaare umfaßt.

**Claims**

1. A steering device using lateral gas jets comprising at least one pair of diametrally opposed nozzles (11a and 11b) which are coupled to a gas generator by independent ducts (12a and 12b), a sliding bar (14) and control means (15 and 16) for the said bar, said device being characterized in that the control means are pneumatic and bistable so as to ensure alternating displacement of the bar in such a manner that the extremities (14a and 14b) of the said bar alternatingly completely shut off the said conduits in order to provide steering in accordance with an "all or nothing" effect, said pneumatic sliding bar displacement means comprising two pistons (15a and 15b) fixed to the bar, which are freely movable in two fixed cavities (16 and 16b), said pistons being placed on the two sides of the median section of the bar, the sections of the pistons being in a rectangular form.

2. The device as claimed in claim 1 characterized in that the sliding bar (14) is provided with a projection (21) which is placed in a channel (23) situated in a fixed element (22) in order to provide an abutment means for the said bar.

3 The device as claimed in claim 1 or claim 2 characterized in that it comprises two pairs of nozzles directed in two planes set at a right angle to each other.

# FIG_1

100

110b

130b

120b

140b

135b

135a

120a

155

150

130a

140a

110a

# FIG_2

Z

Y

3

4  5  7a  1  6  7b

2

X

CG

FiG_4

# FIG_3

# FIG_5

# FIG_6

0 112 755

# FIG_7

9

# FiG_ 8